(19) **Europäisches Patentamt / European Patent Office / Office européen des brevets**

(11) **EP 3 864 441 B1**

(12) **EUROPEAN PATENT SPECIFICATION**

(45) Date of publication and mention
of the grant of the patent:
**27.03.2024  Bulletin 2024/13**

(21) Application number: **19801097.7**

(22) Date of filing: **08.10.2019**

(51) International Patent Classification (IPC):
*G01T 1/24* *(2006.01)*

(52) Cooperative Patent Classification (CPC):
**G01T 1/241**

(86) International application number:
**PCT/IB2019/058541**

(87) International publication number:
**WO 2020/075051 (16.04.2020 Gazette 2020/16)**

(54) **SEMICONDUCTOR DRIFT DETECTOR WITH AN OPTIMIZED EFFECTIVE AREA**

HALBLEITER-DRIFTKAMMER MIT EINER VERBESSERTEN AKTIVEN FLÄCHE

CHAMBRE À DÉRIVE À SEMI-CONDUCTEUR AVEC UNE SURFACE ACTIVE OPTIMISÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.10.2018  IT 201800009266**

(43) Date of publication of application:
**18.08.2021  Bulletin 2021/33**

(73) Proprietor: **Istituto Nazionale di Fisica Nucleare
00044 Frascati (RM) (IT)**

(72) Inventors:
• **ZAMPA, Gianluigi
34149 Trieste (IT)**
• **ZAMPA, Nicola
34149 Trieste (IT)**
• **RACHEVSKI, Alexandre
34149 Trieste (IT)**
• **VACCHI, Andrea
34149 Trieste (IT)**

(74) Representative: **Metroconsult Srl
Foro Bonaparte 51
20121 Milano (IT)**

(56) References cited:
**EP-A2- 2 275 837     US-A1- 2004 149 919**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of application of the invention

The present invention relates to a semiconductor drift detector having an optimized effective area.

State of the art

It is known that a silicon drift detector (SDD) is an ionizing radiation semiconductor detector in which the electric charge (majority carriers), released in the volume depleted by the incident radiation during the ionization process, is transported to a collection electrode (anode) by means of a drift electric field independent of the one that causes volume depletion.

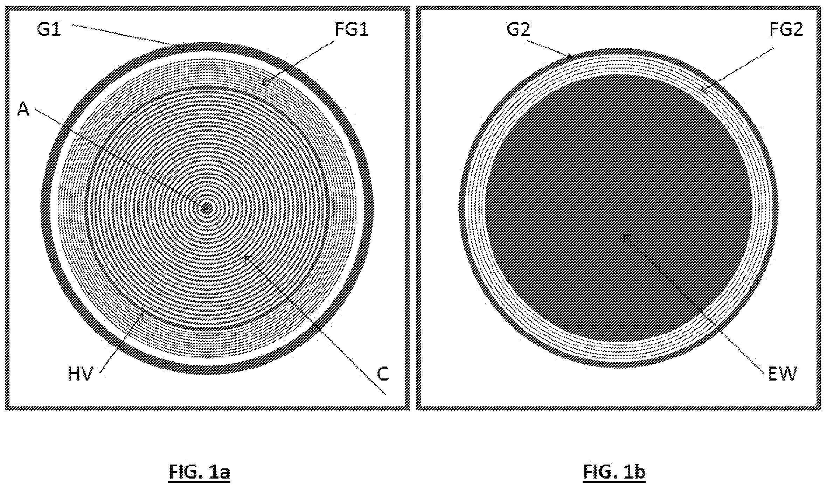

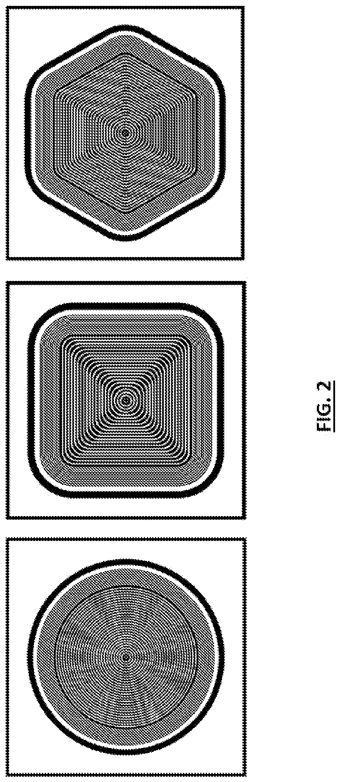

It is known that a typical SDD (Figure 1a) can be divided into two regions: the core, containing the active volume, and the periphery, the function of which is to insulate the active volume from the edge of the device, so as to minimize the leakage current. The core of an SDD is made by creating, on the first face of the detector, a series of concentric junctions, not necessarily having a circular shape (see examples in Figure 2), called drift electrodes (cathodes) C, with reverse bias, around the anode A that collects both the signal and the leakage current generated within the active volume. The anode A is connected to the silicon substrate via an ohmic contact and has a potential close to zero (ground), imposed by the reading circuit.

The drift electrodes C are connected to one another by a series of resistors making up a divider integrated into the device, so that the power applied across the outermost cathode (HV-CORE) and the innermost one (return) participates in the depletion of the detector and permits the generation of a drift electric field that pushes the majority carriers towards the collection electrode A. The drift electrodes C are powered with voltages of increasing amplitude starting from the return, up to the HV-CORE electrode (HV in Fig. 1a, which is the widest cathode). From a functional viewpoint, because of the distribution of the potentials in the detector, the HV-CORE electrode is the divide between core and periphery on this face of the detector: the charge released by the ionization process immediately under its inner half is collected at the anode, while the charge released in the outer half reaches the periphery. For this reason, the active part of the detector is externally delimited by the center line of the HV-CORE.

Around the active region there may be a number of concentric electrodes, generally not actively powered and referred to as floating guards FG1, which define the electric field in the periphery of the device.

An external ring G1 is normally present, connected to ground, which performs the function of collecting the leakage current generated outside the active volume.

On the opposite surface of the detector (Figure 1b) there is a continuous junction EW, with reverse bias, which provides the radiation "entrance window" and covers the entire sensitive (or active) area of the detector. Concentric electrodes FG2 (floating guards) may be arranged around it, also adapted to define the electric field in the periphery of the device. There may also be an external ring G2, to be connected, if necessary, to ground.

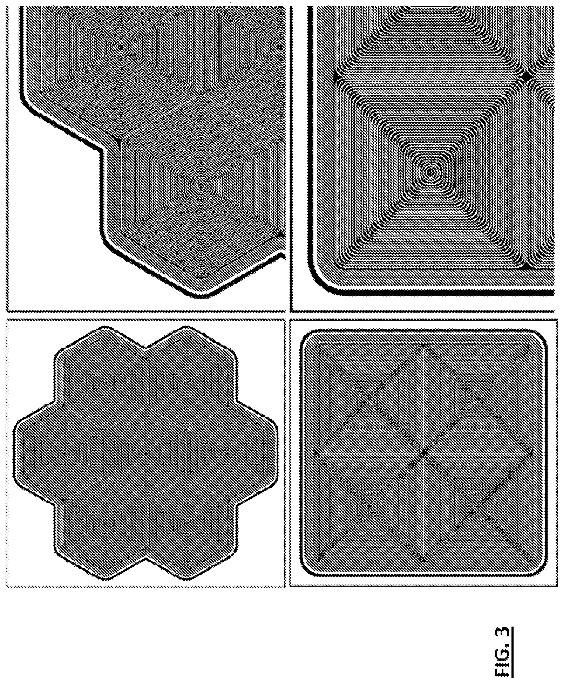

It is also known that detector arrays can be built (Figure 3) by arranging side by side in the plane the active regions of a given number of detector cores having in common an outermost side of the drift electrode HV-CORE, and by creating a peripheral structure totally enclosing the array.

Generally, the detector periphery, external to the core of the device, has a width ranging from two to three times the thickness of the detector, and is designed to eliminate any potential problems related to, for example, the cutting of the detector from the wafer in which it is produced.

A first problem suffered by semiconductor detectors, and hence also by SDDs, is due to the fact that the ionization process is not punctual, but involves a certain volume dependent on the energy and type of the incident radiation. Part of the ionization charge is lost when this process occurs across the surface that delimits the active region of the sensor, causing a wrong measurement of the energy deposited into the detector. This problem is generally remedied by means of a suitable collimator, which blocks the radiation incident on the detector in proximity to the border of the active volume.

Another problem lies in the fact that the effective area at the entrance window EW of the detectors known in the art is always smaller than the active area subtended by the internal half of the HV-CORE electrode, which is the maximum obtainable area when this electrode, as is generally the case, is the one which is biased at the highest potential (in absolute value) throughout the detector, including the peripheral region. This fact implies the need for enhanced collimation, compared to the full efficiency case.

This is due to the strong electric field that is present on the edge of the detector, which is caused by the fact that, within a small space, the potential of the substrate is reduced to zero. The effective area losses may be as high as some tens of percentage points, depending on the detector's size.

An additional problem, connected to array production, is that the peripheral cells have a smaller effective area than the internal cells because of the so-called "edge effect", known in the art.

A known attempt to solve the above problems has been proposed in EP-2275837-A2, and will be commented on below with reference to Figure 4, which shows the cross-section of the detector disclosed therein.

In the upper left corner there is the central anode 41. On the right, the small rectangles designated as 42 are the concentric cathodes. Numeral 43 designates the HV-CORE electrode. At the bottom, the entrance window 45 is highlighted. On the right side there is an inactive zone 44 of a known type, which electrically closes the structure.

*De facto,* the detector's efficient zone is the one that goes from the left side to the vertical line 46. The highest power point HV-CORE 43 is outside the efficient zone. Therefore, particle capture efficiency is limited with respect to the highest power point, and never reaches 100%, being typically around 70% .

Indicating relative efficiency as $\alpha$, we have

$$A_{\text{efficace}} = A_{\text{HV}} \cdot \alpha \text{ , with } \alpha \le 1.$$

with $\alpha \le 1$.

Where $A_{\text{efficace}}$ is the actual efficiency obtained, $A_{\text{HV}}$ is the maximum efficiency that would be obtained if it were possible to utilize the entire area of the entrance window up to the point where it meets HV-CORE.

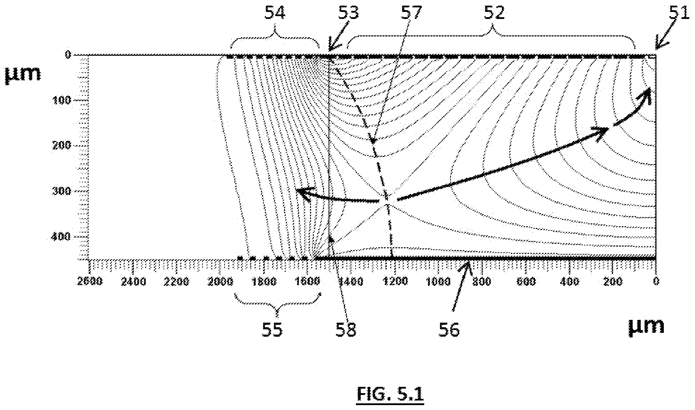

Figure 5.1 (cross-section of a circular SDD having a radius of 2,600 $\mu$m and a thickness of 450 $\mu$m) highlights some effects that are obtained with other known solutions, which effects are similar to those described above.

Numeral 51 designates the anode, numeral 52 designates the series of concentric cathodes, numeral 53 designates the HV-CORE point, numerals 54, 55 designate the concentric "floating guard" cathodes and the ground ring, numeral 56 designates the entrance window EW.

The continuous curved lines highlight the equipotential lines internal to the detector. The dashed vertical curved line 57 shows the boundary of the effective (active) area in relation to the maximum possible area (vertical line 58). The ineffective region, on the left of the line 57, is such that the charge produced therein by the ionization process *de facto* heads for the ground ring, and is not collected at the anode (see the continuous arrows: the rightward direction shows the progression of the charge that is actually collected on the anode 51, whereas the leftward direction indicates the direction of the charge that is not collected by the anode). In order to attain maximum efficiency, the dashed curved line 57 should correspond to the vertical 58, but this is not achieved.

With this implementation, one obtains $\alpha = 0.65$.

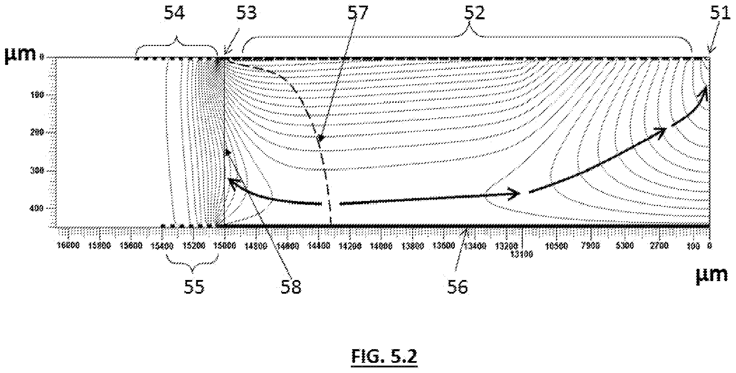

Figure 5.2 shows the effect on a detector manufactured by using the same method, but having a much bigger diameter (circular SDD having a radius of 16,500 $\mu$m and a thickness of 450 $\mu$m). The elements of this SDD are numbered in the same way as in Figure 5.1. From this comparison one can see that at the entrance window (dashed line 57) the insensitive area has extended inwards, going from approx. 290 $\mu$m to approx. 680 $\mu$m.

Another known attempt to solve the above problems is proposed in US2004/0149919-A1, and will be commented on below with reference to Figure 6, which shows the cross-section of the detector disclosed therein.

Indications are provided for the HV-CORE cathode 63, the anode 61, the various electrodes, the concentric cathodes 62. On the opposite side there is the "entrance window" 64, and an electrode 65 powered with a voltage of greater amplitude than the entrance window is introduced at the level of the cathode 63 for the following purpose: if one wants to prevent the majority carriers from going out of the active volume, thus generating inefficiency, then it is necessary to add a potential barrier on the side of the "entrance window", which they cannot overcome. In this way, a larger efficient region is obtained. See the dashed line 66 with a central concavity, in which the region is not efficient, and the curve goes back towards the anode.

This solution suffers from the drawback that it is necessary to insert an additional electrode (65), resulting in problems related to the device's bias on the side of the "entrance window".

Summary of the invention

Therefore, the present invention intends to propose a semiconductor drift detector having an optimized effective area, aimed at overcoming all of the above-mentioned problems.

The invention concerns the optimization of the effective area of the semiconductor drift detector and of arrays of such detectors, of any size.

The present invention teaches to eliminate the edge inefficiency of the detectors according to prior-art solutions, which are used as a reference as regards the effective area to be achieved, by modifying the external geometry of the detector's core without making the structure of the device more complex on the side of the "entrance window".

The invention is based on the interposition, between the core and the periphery, of a "symmetrization" intermediate region, the function of which is to make the electric field in the region around the core edge more symmetrical, but not necessarily perfectly symmetrical.

The electric field is the (negative) gradient of the electric potential. The electric field lines are orthogonal to the equipotential lines; therefore, if the potential distribution is symmetrized, the field will be symmetrized as well (and vice versa).

The proposed solution also makes it possible to supply power to the detector on the side of the drift electrodes only, by exploiting the so-called "punch-through", i.e. a particular phenomenon occurring in semiconductor devices, *per se* known, which electrically connects two junctions when their potential difference cancels the potential barrier that normally keeps them insulated.

This solution makes it possible to avoid any electric connections with the external power circuitry on the detector's side corresponding to the "entrance window", thus facilitating the coupling of the detector with scintillator crystals for applications that require the use thereof.

The invention is based on the following principle:

A (non-constant) symmetrical distribution of electric potential around an axis (surface) defines an electric field whose component orthogonal to the same axis (surface) has the same amplitude, but opposite direction, in the two regions delimited by the axis (surface) of symmetry.

The symmetry in the distribution of the electric potential at the edge between the core and the periphery of the detector allows maximizing the effective charge collection area, which, due to this very symmetry, extends up to the center line of the HV-CORE electrode, i.e. becomes equal to the active area of the detector. It is not strictly necessary to ensure perfect symmetry to attain the desired maximization of the active area at the entrance window. The same result can be achieved with a partially asymmetrical field, by designing the intermediate region in such a way that the separation between the active region and the passive region of the detector begins at the desired point at the level of the entrance window and extends towards the outside of the detector within the internal volume of the device.

It is one object of the present invention to provide a semiconductor drift detector comprising a semiconductor layer wherein, on a first face, a central electrode acting as an anode is present in a first zone of the layer, a series of drift electrodes acting as a cathode are present around said central electrode, a last electrode of which is opposite to the anode, and one or more further guard electrodes are present in a second zone of the layer beyond said last electrode, and on a second face of the layer, opposite to the first one, there are a continuous junction acting as an "entrance window" for particles to be detected and, externally to said continuous junction, one or more further guard electrodes, characterized in that between said first zone and second zone an intermediate region is interposed in the layer, comprising on said first face one or more further "symmetrization" electrodes acting as cathodes, and comprising on said second face an extension of said continuous junction having a width of at least the thickness of the detector, said one or more symmetrization electrodes being adapted to create, when all electrodes are powered, an almost symmetrical shape of the electric field lines in the layer, with opposite slope, relative to the shape of the electric field lines generated by said series of drift electrodes, said intermediate region having a width at least equal to the thickness of the layer, and beginning at and across said last electrode.

It is another object of the present invention to provide an array of semiconductor drift detectors, comprising multiple detectors as defined above, with the cores arranged side by side and enclosed within the additional intermediate region and the known periphery that surrounds them.

It is a particular object of the present invention to provide a semiconductor drift detector having an optimized effective area as set out in detail in the claims, which are an integral part of the present description.

Brief description of the drawings

Further objects and advantages of the present invention will become apparent from the following detailed description of a preferred embodiment (and variants) thereof referring to the annexed drawings, which are only supplied by way of non-limiting example, wherein:

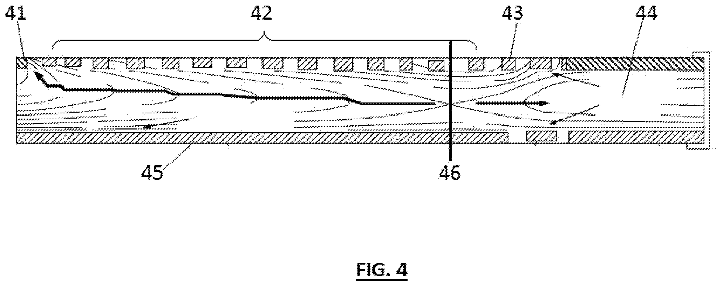

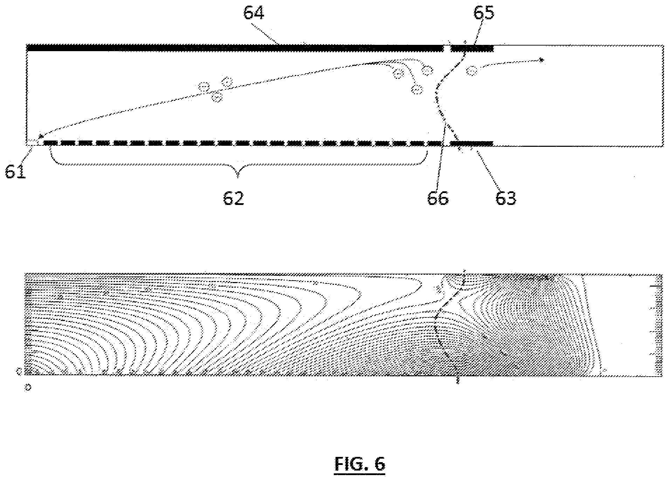

Figures 1 to 6 show some implementation examples of known silicon drift detectors;
Figures 7, 8.1, 8.2, 9.1, 9.2 show some implementation examples of semiconductor drift detectors and arrays thereof in accordance with the present invention.

In the drawings, the same reference numerals and letters identify the same items or components.

Detailed description of some embodiments

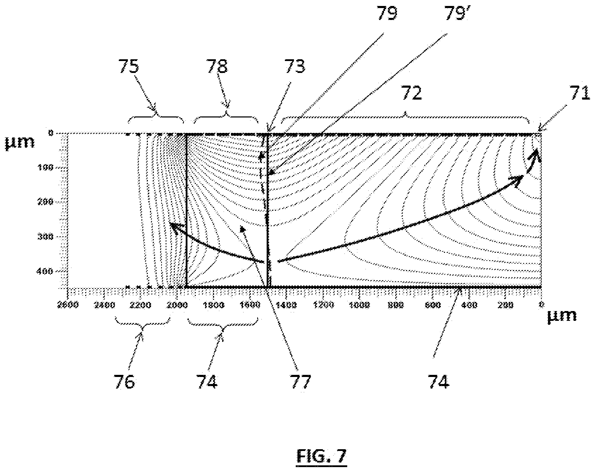

Some non-limiting exemplary embodiments of the invention will now be described with reference to Figures 7, 8.1, 8.2, 9.1 and 9.2, which show one of the two cross-section halves of the single-core detector or, in case of SDD arrays, the outer half of one of the peripheral cores. The known detector represented in Figure 5.1 has been used as a reference, to which the techniques derived from the present invention have been applied.

As will be described more in detail hereinafter, the structure of the detector preferably has an essentially circular or polygonal symmetry with respect to the anode point.

Nevertheless, detectors with rectangular cores or, in general, oblong cores, i.e. cores having an irregular polygonal shape or an elliptic shape, or formed by two semicircles separated by a rectangle, may also exist. The invention is intended to be applicable to all such cases.

The width and thickness dimensions of the cross-sections are indicated in micrometers ($\mu$m). The horizontal axis may have two different scales, i.e. one scale may be extended to higher values, for the purpose of highlighting the part of most interest.

In the non-limiting exemplary embodiments described below, the HV-CORE cathode is powered, unless otherwise specified, with -140 V, the entrance window is at -70 V, the return cathode is biased at -15 V, and the anode is grounded (0 V). The resistivity of the silicon substrate (of the "n" type) is 9 k$\Omega$·cm.

In general, power is supplied to the SDD detector, in all of its variants described herein, by means of a single power supply and suitable resistors at each cathode, according to design principles within the implementing grasp of a person skilled in the art.

More specifically, an integrated divider and an external divider are normally employed. The latter is used for obtaining the voltage for the entrance window and possibly also for the other electrodes outside the core, which have an intermediate potential. If these can be allowed to power themselves by punch-through, then the external divider is not necessary.

In the upper right corner of Figure 7, which shows a first exemplary embodiment, there is the central anode 71. On the left thereof, the small rectangles designated as 72 are the concentric cathodes. Numeral 73 designates the HV-CORE electrode, where the central zone, i.e. the core, of the structure ends. At the bottom, the entrance window 74 is highlighted. On the outermost left side there is an inactive peripheral zone 75, 76 of a known type (floating guard), which mechanically closes the structure.

In accordance with the essential aspect of the present invention, between the central zone and the peripheral zone an intermediate region 77 is inserted, in which the entrance window 74 is extended up to the outer limit of the region, and on the opposite edge further concentric electrodes/cathodes 78 are added, outside the HV-CORE electrode 73, performing the function of symmetrizing the electric field as much as possible in the interface region between the core and the edge of the detector, thereby making the electric field in the volume around the core edge more symmetrical.

In all of the implementation variants described herein, the intermediate zone (77, 87, 97) begins at and across the HV-CORE cathode. The HV-CORE cathode has dimensions that depend on the specific implementation, as will be described later on, and therefore extends partly also into the intermediate region.

The partial symmetrization thus obtained concerns the electric field generated inside the device when power is supplied thereto. This optimized field configuration is achieved by supplying the electrodes 78 with potentials that are appropriately scaled outwardly (towards the floating guard area) for the specific design of the additional intermediate region.

A person skilled in the art will be able to determine the potential values to be associated with the individual electrodes for the specific configuration to comply with the features of the invention.

More specifically, starting from a given configuration of the electrodes and of the potentials associated therewith to be used for the detector, a device simulator allows determining by successive approximations, among other parameters, the electric fields and the distribution of the potentials within the device. Some examples of device simulators are Taurus Medici (2D) or Sentaurus Device (2D and 3D) by Synopsys®, or Atlas (2D) or Victory Device (3D) by Silvaco®.

Based on these data it is possible to create detectors according to the invention having characteristics like those shown in Figures 7-9. In particular, the dashed line (79, 89, 99 in the figures) corresponds to the location of the points where the derivative relative to the horizontal coordinate of the equipotential lines is null.

Another simple way to obtain the curve is to use the horizontal component of the velocity of the majority carriers, which must be cancelled along the dashed line (79, 89, 99), drawn with a slight curvature, that marks the boundary between the regions where the charges move towards the anode (on the right) or towards the ground ring and the floating guard zone of the detector (on the left). The coordinate of the dashed line (79, 89, 99) where the latter intersects the entrance window (74, 84, 94) permits computing the parameter α and verifying, therefore, if the configuration under examination fulfils the design criteria.

The active area of the detector on the entrance window can be determined experimentally by using, for example, a low-energy (e.g. 2keV) laser or collimated source of X-rays to scan the relative position between the detector and the photon source (the laser or the collimated source of X-rays). See in the drawing the curved equipotential lines (of the electric field) inside the detector, which are almost symmetrical relative to the vertical line 79' where the intermediate region begins, at the HV-CORE 73.

The shape of the equipotential lines in the intermediate region has curvatures with opposite slope compared to that of the curve in the core area, without being necessarily specular relative to the line 79'.

In this way, *de facto,* the slightly curved dashed vertical line 79 that delimits the effective (active) zone, useful for collecting the charge released by the incident radiation, comes quite close to the vertical line 79' that delimits the usable area. The larger the additional part external to the core, the higher the symmetry obtained. The best result would be obtained by reproducing the entire cathode structure, but this is actually of little use in practice because of the required space. Even with this approximation, one can obtain a value of α (relative efficiency as defined above) almost equal to 1.

The extent to which α deviates from 1 depends on the implementation. In the exemplary embodiments shows herein, the deviation is always less than 9 thousandths. The quality of the result can also be expressed otherwise by indicating how much the active region deviates from the core edge (lines 79', 89' e 99'), at the level of the entrance window, relative to the thickness of the detector: this measurement, unlike α, does not depend on the width of the SDD.

According to this last criterion, we have:

| | Δx/S % |
|---|---|
| FIG. 7 | 1.1 |
| FIG. 8.1 | 1.6 |
| FIG. 8.2 | 3.8 |

(continued)

|        | Δx/S % |
|--------|--------|
| FIG 9.1 | 0     |
| FIG 9.2 | 0     |

where S is the thickness of the detector (numbers rounded off to the first decimal), and Δx is the deviation.

Note that in the case of the original drawing of the prior-art detectors shown in Figures 5.1 e 5.2, Δx/S is 52.4% and 136.4%, respectively.

The width of the intermediate region (77, 87) in the layer gives the possibility of making the electric field sufficiently symmetrical in the volume around the core edge, so as to obtain the desired optimization of the effective area, i.e. a value of α close to 1.

*De facto,* it has been found that the minimum width of the intermediate zone which maximizes the value of α is equal to the thickness of the semiconductor layer of the detector. It is true that by increasing the width of the intermediate zone better symmetrization conditions could be obtained, but problems relating to the dimensions of the overall structure would arise. Moreover, as aforesaid, it becomes *de facto* unnecessary to enlarge this intermediate zone, since the minimum width already gives a value of α close to 1.

In this exemplary embodiment, the additional electrodes are of the di- type and concentric to the internal ones, powered with voltages scaled in the opposite direction compared to the internal part, thereby providing the effect of symmetrizing enough the electric field in the interface region between the core and the outer edge of the detector.

The thickness of the cross-section is 450 μm (typically in the range of 300 to 1,000 μm), whereas the width of the intermediate region 77 ranges from 1,500 to 1,950 μm, equalling the thickness of the detector.

More in particular, in this specific exemplary embodiment:

- α = 0.993 is obtained;
- For the detector, 5 "symmetrization" electrodes were used (pitch of 70 μm, as for the core cathodes, the last electrode being wider than the others), scaling the potentials linearly relative to the HV-CORE cathode and supplying -130 V to the outermost one.

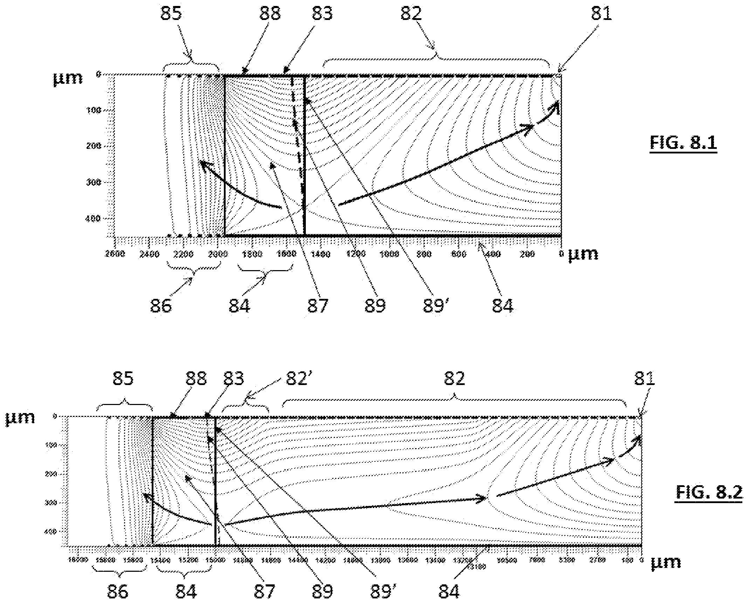

Figures 8.1 and 8.2 show further non-limiting exemplary embodiments. In the upper right corner, there is the central anode 81. On the left, the small rectangles designated as 82 are the concentric cathodes. Numeral 83 designates the HV-CORE electrode, which is wider in this case, in the intermediate region part, which is larger than in the previous case. At the bottom, the entrance window 84 is highlighted, which extends throughout the width of the additional region 87. On the left side there is the inactive peripheral zone 85, 86 (floating guard and ground ring).

Next to the HV-CORE electrode, widened to 220 μm compared to the original 80 μm, another wide electrode 88 is introduced (260 μm), supplied with -132V voltage.

In this case as well, the slightly curved dashed vertical line 89 delimiting the effective (active) zone, useful for collecting the incident radiation, at the level of the entrance window, approximates to the greatest extent the vertical line 89' that delimits the usable zone.

The cross-section thickness is still 450 μm; likewise, the width of the intermediate region 87 ranges from 1,500 to 1,950 μm in the case shown in Figure 8.1 and from 15,000 to 15,450 μm in the case shown in Figure 8.2, i.e. it matches the thickness of the detector. More in particular, in this specific exemplary embodiment:

- α = 0.991 is obtained in the case of Figure 8.1 and α = 0.998 is obtained in the case of Figure 8.2;
- the wide symmetrization electrode 88 is powered by punch-through with the HV-CORE, but it may also be powered via an external connection.

Figure 8.2, which shows an SDD having the same dimensions as the one depicted in Figure 5.2, represents the case of a very big detector that would require more room for symmetrization. In order to reduce the size of the additional region, as described above, to a width equal to the thickness of the layer, the value of the divider resistors connected to the outermost core electrodes (82', 70μm pitch), close to the beginning of the intermediate region, is appropriately increased, compared to the other ones, in order to reproduce in this region an electric potential distribution equal to that of the reference detector shown in Figure 8.1. In this non-limiting example there are five resistors, and the voltage at which the fifth internal cathode is biased is approximately 108 V, while the potentials of the cathodes located between it and the HV-CORE are scaled linearly by means of integrated resistors having a value 14 times greater than that of the resistors that supply the bias potentials to the innermost cathodes.

The above-described technique of increasing the value of the resistors close to the beginning of the intermediate region is generally applicable to all the variants described herein, for the purpose of reducing the size of the additional region.

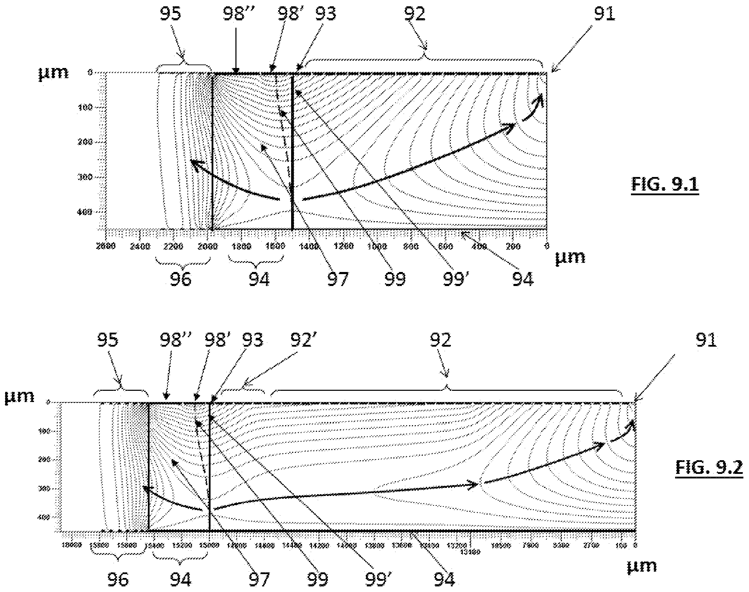

Figures 9.1 and 9.2 show further exemplary embodiments applicable, for example, to the case of cell arrays, wherein multiple SDD detectors are arranged side by side. Lengthwise, the detector of Figure 9.1 has the same dimensions as the one shown in Figure 5.1, while the detector of Figure 9.2 corresponds to the one shown in Figure 5.2.

On the right upper side there is the anode 91. On the left of the latter, the small rectangles designated as 92 are the concentric cathodes.

In the case of Figure 9.2, the cathodes 92' are also highlighted, for which modified divider resistors are used, as in the case of Figure 8.2.

Numeral 93 designates the HV-CORE electrode, located at the vertical line 99' where the intermediate region 97 begins. At the bottom, the entrance window 94 is highlighted, which extends throughout the width of the intermediate region 97. On the outermost left side there is the inactive peripheral zone 95, 96 (floating guard and ground ring).

Beside the HV-CORE electrode 93, within the intermediate region 97, another wide electrode 98' (HV) is introduced, supplied with a voltage of greater amplitude, in absolute value, than the HV-CORE 93: for example, the HV cathode 98' (which is outside the array) is powered with -140 V, whereas the HV-CORE is biased at -134 V). Next to the electrode 98' there is a further "symmetrization" electrode 98", but there may be more than one, powered with lower voltages, as previously described.

The size of the additional electrodes may be different, depending on the specific implementation, to appropriately symmetrize the electric field. The area of the entrance window becomes wider.

- The reference detector is still the 7.07mm$^2$ SDD of Figure 5.1.
- The bias external to the cell makes it possible to easily obtain the optimum, which in this case is achieved on two cell arrays, one of which having the same cores as the reference array and the other one having 706.9mm$^2$ cores, equalling the detector of Figure 5.2.
- In both cases, the technique envisaging the use of a wide electrode biased by punch-through (at -132 V) has been used, but the same result could be obtained by using multiple electrodes suitably powered (e.g. as in the first case shown in Figures 7.1 and 7.2).

In this case, it is possible to extend the effective area of the detector beyond the center of the HV-CORE cathode, since the added cathode is powered with a higher voltage (in absolute value) than the HV-CORE, obtaining values of $\alpha \geq 1$.

The addition of the HV cathode 98' powered with a higher voltage, in absolute value, than that of the HV-CORE is generally applicable to all of the variants described herein, and is aimed at maintaining the minimum amplitude of the intermediate zone, especially when there is a great electric field difference between the internal part (core) and the external part (floating guard and ground ring) of the detector, thus facilitating the achievement of the condition wherein the value of $\alpha$ is close to 1.

It is not strictly necessary that the HV cathode with maximum power (98') is adjacent to the HV-CORE cathode, since it may also be located in an intermediate position within the intermediate region. More in general, however, the higher the number of electrodes inserted between the HV-CORE and HV electrodes, the lower must be the voltage applied to HV-CORE (thus reducing the usable drift field).

The highest-power HV cathode (98') is distant from the outer edge of the intermediate region by at least half the thickness of the detector. Further symmetrization electrodes (98") external to the highest-power HV cathode (98') may be present, supplied with voltages scaled in the opposite direction compared to the series of drift electrodes (92).

Note that, for practical purposes, the achievement of perfect symmetry of the electric field in the volume around the core edge requires the use of a structure of external electrodes that is generally too wide; in those cases wherein this is not desirable (that is, almost always), one may opt for a compromise by reducing the level of symmetry just enough to achieve the goal, while still limiting the width of the structures external to the HV-CORE electrode

Since the detector's internal drift field decreases as the core size increases, potential "symmetrization" requires a progressively increased width because the external electric field must also decrease accordingly.

Aiming at keeping this region constant, SDD optimization can be made easier by resorting to an expedient (Figures 8.2 and 9.2): this involves fixing the peripheral region as it would be done for a smaller reference detector (Figures 8.1 and 9.1) and, at the same time, adjusting the potentials of a suitable number of drift electrodes adjoining the HV-CORE to obtain the same degree of symmetry that optimizes the reference device (by simply using the same electric potentials).

This can be easily done by adapting the values of the resistors of the integrated divider that supplies power to all the drift electrodes. The resistance values can be easily determined by a person skilled in the art.

Apart from the case of a perfectly symmetrical electric field, in which the electrode structure in the terminal region of the core is replicated at the periphery for a sufficient width, there are several methods for optimizing the effective area in order to obtain $\alpha \approx 1$ by making the electric field sufficiently symmetrical; such methods include, in addition to widening the "entrance window" to at least the thickness of the detector, the following expedients to be applied on the opposite side (as at least partly described above):

- using a series of suitably biased external electrodes (as in the perfect symmetry case, but in a smaller number, and possibly with different geometries);
- widening the HV-CORE electrode (or using an electrode biased at the same potential as HV-CORE) and using one or more electrodes having suitable geometry and bias;
- using a power electrode external to the core, biased at a higher potential (in absolute value) than the HV-CORE electrode, along with one or more external electrodes having suitable geometry and bias.

The electrodes in the electric field "symmetrization" area may be powered by the external circuitry or, as an alternative, by a dedicated divider which can be integrated into the device itself, or they may be designed in such a way that they can power themselves by "punch-through".

Finally, in the case wherein it is not of interest to power the "entrance window" by exploiting the "punch-through" phenomenon, the effective widening thereof into the electric field "symmetrization" region can also be obtained by means of a wide electrode, electrically insulated from it, but biased at the same potential as the "entrance window" through a separate circuit, thus making it possible to filter the electric noise separately at the two electrodes.

The above-described operations are within the implementing grasp of a person skilled in the art.

The user circuit into which the detector of the invention is inserted may be of a type known in the art, and therefore it is not necessary to describe it in detail, since a person skilled in the art will be able to implement it.

The main aspect of the invention is, therefore, the use of a region for the "symmetrization" of the potentials (and hence of the electric fields), which, being interposed between the core of the detector (whether a single detector or a detector array) and the periphery, allows obtaining an effective area as large as possible at the level of the entrance window (i.e. the one subtended at the HV-CORE electrode). "Symmetrization" refers to increased symmetry of the electric field within the detector in the region around the HV-CORE electrode, which not necessarily implies the achievement of perfect symmetry.

Therefore, in accordance with the fundamental aspect of the present invention, between the central zone (core) and the peripheral zone an intermediate region (77, 87 and 97) is inserted, the function of which is to make the electric field around the core edge (elements 53, 73, 83 and 93) more symmetrical. This technique allows extending the detector's collection efficiency, throughout its thickness, up to the edge of the core. In said intermediate region, the entrance window (74, 84 and 94) is extended to its external limit, and on the opposite surface one or more concentric electrodes/cathodes (78, 88, 98' and 98") are added in order to degrade the electric potential in an appropriately controlled manner. The number, the geometry and the electric potentials may vary as a function of the particular application for which the specific SDD is designed.

The HV-CORE cathode may be extended outwardly (Figures 8.1 and 8.2) and/or, if a low degree of symmetry is acceptable, the cathode powered with the voltage of greatest amplitude may be one of the added ones (e.g. the one adjacent to the HV-CORE, as in Figures 9.1 and 9.2).

All design solutions derived from the application of the present invention are characterized in that they have:

- $\alpha$ close or equal to 1 (object of the invention);
- the entrance window extended by a quantity at least equal to the thickness of the detector relative to the point where the detector's full efficiency ends;
- the distance between the projection of the edge of the entrance window on the opposite surface of the detector and the outer edge of the cathode powered with the potential of greatest amplitude, i.e. HV-CORE or one of the added ones (which are internal to the area subtended by the entrance window), that is, the length of the segment that joins them, equal to or longer than half the thickness of the detector.

Furthermore, as described above, in order to keep the additional intermediate region compact, especially with SDDs having an active surface exceeding a given value, e.g. a couple of tens of mm², the resistors of the integrated divider, which supply power to some cathodes (82') internal to the core and adjoining the HV-CORE, in a number dependent on the particular application for which the detector is designed, have values appropriately increased compared to the other divider resistors, in an area having a length *de facto* amounting to at least three quarters of the thickness of the detector. This is done in order to cause the electric field in the region between the core edge and the core interior to become almost independent of the core area. This is particularly useful when the detector is very long (see the cases shown in Figures 8.2 and 9.2) in order to obtain a value of $\alpha$ approaching 1 without the need for widening the intermediate zone.

Among the possible implementation variants of detectors containing this "symmetrization" region, the following ones may be mentioned:

- Detectors made on n-type substrates, wherein electrons are the majority carriers, and devices obtained by using p-type substrates, wherein holes are the majority carriers;
- Any type of semiconductor material (even composite ones), with any crystal orientation, and with any thickness of the material used for making the detector; for example, in addition to silicon, germanium, silicon carbide, gallium arsenide of appropriate thickness, suitable for the energy of the incident particles to be detected;

- Cases are included with implanted, diffused or Schottky junctions, whether sharp or with depth and/or lateral gradation of any kind;
- Any electrode geometry suitable for the intended purpose, including the optional use of field plates that may cover, whether wholly or partially, the space between two successive junctions, even overlapping the junction to which they are not connected;

- Any configuration of the integrated power resistors is included; this means that the invention also applies to the case wherein not all resistors of the divider that supplies power to the core have the same value. In fact, given any potential (or electric field) distribution in the core, resulting from any resistor configuration, a person skilled in the art will be able to infer the optimal geometry of the intermediate region (number and size of the electrodes) and to supply power thereto appropriately. Therefore, the core is first designed as desired, according to specific requirements, and then, based on the core, the intermediate region is designed. No divider configuration exists for which this cannot be done.

- Any geometry of the core and periphery of the SDD is included;

- Any method for controlling the equivalent oxide charge are included, such as, for example, surface doping, in order to increase the concentration in the region around the interface between oxide and semiconductor;

- Any technological steps suitable for reducing the leakage current in the devices are included;

- Cases are included wherein the electrodes are powered by punch-through, or via an external circuitry, or via an integrated divider, or any combination of such methods;

- Cases are included wherein the "entrance window" is powered externally or through the use of the "punch-through" phenomenon;

- Cases are included wherein the "entrance window" is either segmented in the "symmetrization" region or continuous;

- Detectors are included which are to be used for of any type of radiation: visible light, X and gamma rays, ionizing and neutral particles. It may be envisaged the use of detectors coupled to other materials allowing for radiation detection (e.g. scintillator crystals or the like).

Compared to prior-art silicon drift detectors, the invention makes it possible to maximize the effective area, causing it to become at least equal to the area subtended by the center line of the HV-CORE electrode of a standard detector, which is the largest possible area for such a detector.

In detector arrays made in accordance with the teachings of the present invention, all cells have the same effective area on the side of the "entrance window" (equal to the active area of the cores), whereas in prior-art arrays the border cells have a smaller effective area.

The effective area being equal, the quantity of semiconductor used in accordance with the invention is smaller (which is always the case for arrays, whereas for individual detectors this occurs when the core size exceeds a couple of tens of $mm^2$); moreover, the effective area is stabilized by the additional "symmetrization" region.

It should also be reminded that, in order to minimize the edge effects that worsen the detectors' energetic resolution, especially in X-ray spectroscopy applications, these detectors must always be collimated with a suitable external screen: the maximization of the effective area makes it possible to collimate the detectors less heavily than necessary for standard devices.

In large single detectors, furthermore, the separation between the effective volume and the periphery is sharper because of the higher electric fields.

Compared to the known method described above with reference to US2004/0149919-A1, the present invention allows keeping a simple design of the "entrance window" side (even when it is segmented) and not having any electric connections on the "entrance window", which would make the coupling with scintillator crystals difficult.

In addition, unlike the above-mentioned patent, along the depth of the detector the effective volume does not narrow, while it widens a little on the face opposite to the "entrance window".

The vertical profile of the effective volume affects the size of the collimator when measuring X-rays, because these rays are absorbed to increasing depths as the energy of the photons increases, not only on the surface as is the case with visible light photons.

The semiconductor drift detector of the invention can be used in several fields, whether for research or industrial applications, including detectors of fluorescence in synchrotron light lines, fluorescence detectors for cultural heritage applications, X and gamma ray detectors (coupled with scintillator crystals) in homeland security and environmental or agricultural and food product monitoring applications (searching for contaminants by X-ray spectroscopy), as well as in astrophysics experimental research applications.

The above-described non-limiting example of embodiment may be subject to variations without departing from the protection scope of the present invention.

The elements and features shown in the various preferred embodiments may be combined together without however departing from the protection scope of the present invention.

In light of the above description, the man skilled in the art will be able to produce the object of the invention without introducing any further implementation details. In particular, he will be able to create a detector comprising the intermediate region according to the invention, with a suitable number of electrodes and applied potentials, in order to obtain the optimal degree of symmetry of the electric field for the desired application.

**Claims**

1. Semiconductor drift detector, comprising a semiconductor layer comprising on a first face:

- a central electrode acting as an anode (71, 81, 91);

- a series of drift electrodes (C) acting as a cathode around said central electrode;

- a last electrode (73, 83, 93) of the series of drift electrodes (C), opposite to the anode;

- one or more further guard electrodes (75, 85, 95); and further comprising on a second face, opposite the first face, a continuous junction (74, 84, 94) acting as an "entrance window" for particles to be detected and, externally to said continuous junction, one or more further guard electrodes (76, 86, 96),

a first central zone or core comprising the central electrode and ending at the last electrode and a second peripheral zone comprising the guard electrodes and mechanically closing the structure,

wherein between said first zone and second zone an intermediate region (77, 87, 97) is interposed in the layer, comprising on said first face one or more further "symmetrization" electrodes (78, 88, 98' and 98") acting as cathodes, and comprising on said second face an extension of said continuous junction (74, 84, 94) having a width of at least the thickness of the detector, said one or more symmetrization electrodes being adapted to create, when all electrodes are powered, an almost symmetrical shape of the electric field lines in the layer, with opposite slope, relative to the shape of the electric field lines generated by said series of drift electrodes,

**characterized in that**

said intermediate region (77, 87, 97) has a width at least equal to the thickness of the layer, and beginning at and across said last electrode (73, 83, 93).

2. Semiconductor drift detector as in claim 1, wherein said one or more further symmetrization electrodes (78, 88) are powered with voltages scaled in the opposite direction compared to said series of drift electrodes (72, 82, 92).

3. Semiconductor drift detector as in claim 1, wherein said last electrode (83) is longer towards said intermediate region, compared to the length of said drift electrodes (72, 82, 92).

4. Semiconductor drift detector as in claim 1, wherein one of said symmetrization electrodes (98') in said intermediate region, distant from the outer edge of said intermediate region by at least half the thickness of the detector, is powered with a higher absolute voltage value than said last electrode (93), the other ones of said one or more further symmetrization electrodes (98"), external to said one of said symmetrization electrodes (98'), being powered with voltages scaled in the opposite direction compared to said series of drift electrodes (92).

5. Semiconductor drift detector as in claim 4, wherein said one of said symmetrization electrodes (98') powered with a higher voltage is adjacent to said last electrode (93).

6. Semiconductor drift detector as in claim 1, wherein modified integrated power resistors are used in an appropriate number of drift electrodes adjacent to said last electrode, for a length at least equal to three fourths of the thickness of the device, for the purpose of keeping the "symmetrization" region constant as the size of the detector changes.

7. Semiconductor drift detector as in claim 1, wherein said extension of the continuous junction (74, 84) covers the whole width of the intermediate region (77, 87).

8. Semiconductor drift detector as in claim 1, comprising one or more of the following features:

- it is made on n-type substrates, wherein electrons are the majority carriers, or on p-type substrates, wherein holes are the majority carriers;
- it is made from any type of semiconductor material, even composite ones, with any crystal orientation, and with any thickness of the material used for making the detector, suitable for the energy of the particles to be detected;
- it has implanted or diffused or Schottky junctions, whether sharp or with depth and/or lateral gradation of any kind;
- it is made with any electrode geometry suitable for the intended purpose, including the optional use of field plates that may cover, whether wholly or partially, the space between two successive junctions, even overlapping the junction to which they are not connected;
- it may use any configuration of the integrated power resistors;
- it is made with any geometry of the parts internal and external to said last electrode;
- it is made by using any method for controlling the equivalent oxide charge, e.g. surface doping, in order to increase the concentration in the region around the interface between oxide and semiconductor;
- it is made by using any method suitable for reducing the leakage current;
- it has electrodes powered by punch-through, or via an external circuitry, or via an integrated divider, or any combination thereof;
- it has an externally powered or punch-through "entrance window";

- it has an "entrance window" that is either segmented in the "symmetrization" region or continuous;
- it is used for any type of radiation, such as visible light, X and gamma rays, ionizing and neutral particles, with optional use of detectors coupled to other materials allowing for radiation detection, e.g. scintillator crystals.

9. Array of semiconductor drift detectors, comprising a semiconductor layer comprising on a first face:

   - a plurality of central electrodes acting as anodes (91);
   - a plurality of series of drift electrodes (C, 92) acting as cathodes around said central electrodes;
   - a plurality of last electrodes (93) of the series of drift electrodes (C, 92), opposite to the anodes;
   - one or more further guard electrodes (95); and further comprising
   on a second face, opposite the first face, a continuous junction (94) acting as an entrance window extending throughout the array and, externally to said continuous junction, one or more further guard electrodes (96);
   a plurality of first central zones or cores arranged side by side comprising a central electrode and ending at a respective last electrode and a second peripheral zone (95, 96) comprising the guard electrodes and mechanically closing the structure,
   wherein between said first zone and second zone an intermediate region (97) is interposed in the layer, the intermediate region externally surrounding the array and being absent between the array cores comprising
   on said first face one or more further symmetrization electrodes (98', 98") acting as cathodes, and comprising on said second face an extension of said continuous junction (94) having a width of at least the thickness of the detector, said one or more symmetrization electrodes being adapted to create, when all electrodes are powered, an almost symmetrical shape of the electric field lines in the layer, with opposite slope, relative to the shape of the electric field lines generated by said series of drift electrodes, **characterized in that**
   said intermediate region (97) has a width at least equal to the thickness
   of the layer, and beginning at and across said last electrode.

**Patentansprüche**

1. Halbleiter-Driftkammer, umfassend eine Halbleiterschicht, umfassend auf einer ersten Seite:

   - eine als Anode fungierende Mittelelektrode (71, 81, 91);
   - eine Reihe von Driftelektroden (C), die als Kathode um die Mittelelektrode herum wirken;
   - eine letzte Elektrode (73, 83, 93) der Reihe von Driftelektroden (C), die der Anode gegenüberliegt;
   - eine oder mehrere weitere Schutzelektroden (75, 85, 95); und
   ferner umfassend auf einer zweiten Seite, die der ersten Seite gegenüberliegt, eine durchgehende Verbindung (74, 84, 94), die als "Eintrittsfenster" für zu detektierende Partikel dient, und außerhalb der durchgehenden Verbindung eine oder mehrere weitere Schutzelektroden (76, 86, 96),
   einen ersten zentralen Bereich oder Kern, der die Mittelelektrode umfasst und an der letzten Elektrode endet, und einen zweiten peripheren Bereich, der die Schutzelektroden umfasst und die Struktur mechanisch verschließt,
   wobei zwischen dem ersten Bereich und dem zweiten Bereich ein Zwischenbereich (77, 87, 97) in die Schicht eingefügt ist,
   umfassend auf der ersten Seite eine oder mehrere weitere "Symmetrie"-Elektroden (78, 88, 98' und 98"), die als Kathoden wirken, und umfassend auf der zweiten Seite eine Verlängerung der durchgehenden Verbindung (74, 84, 94), die eine Breite aufweist, die mindestens der Dicke des Detektors entspricht,
   wobei die eine oder die mehreren Symmetrisierungselektroden so beschaffen sind, dass sie, wenn alle Elektroden mit Strom versorgt werden, eine nahezu symmetrische Form der elektrischen Feldlinien in der Schicht mit entgegengesetzter Neigung in Bezug auf die Form der elektrischen Feldlinien erzeugen, die von der Reihe von Driftelektroden erzeugt werden,
   **dadurch gekennzeichnet, dass**
   der Zwischenbereich (77, 87, 97) eine Breite aufweist, die mindestens der Dicke der Schicht entspricht und an der letzten Elektrode (73, 83, 93) beginnt und diese überquert.

2. Halbleiter-Driftkammer nach Anspruch 1, wobei die eine oder mehreren weiteren Symmetrisierungselektroden (78, 88) mit Spannungen versorgt werden, die im Vergleich zu der Reihe von Driftelektroden (72, 82, 92) in entgegengesetzter Richtung skaliert sind.

3. Halbleiter-Driftkammer nach Anspruch 1, wobei die letzte Elektrode (83) in Richtung des Zwischenbereichs länger ist als die Länge der Driftelektroden (72, 82, 92).

4. Halbleiter-Driftkammer nach Anspruch 1, wobei eine der Symmetrisierungselektroden (98') in dem Zwischenbereich, die von der Außenkante des Zwischenbereichs um mindestens die Hälfte der Dicke des Detektors entfernt ist, mit einem höheren absoluten Spannungswert als die letzte Elektrode (93) versorgt wird, wobei die anderen der einen oder mehreren weiteren Symmetrisierungselektroden (98"), die sich außerhalb der einen der Symmetrisierungselektroden (98') befinden, mit Spannungen versorgt werden, die im Vergleich zu der Reihe von Driftelektroden (92) in der entgegengesetzten Richtung skaliert sind.

5. Halbleiter-Driftkammer nach Anspruch 4, wobei die eine der Symmetrisierungselektroden (98'), die mit einer höheren Spannung versorgt wird, an die letzte Elektrode (93) angrenzt.

6. Halbleiter-Driftkammer nach Anspruch 1, wobei die modifizierten integrierten Leistungswiderstände in einer angemessenen Anzahl von Driftelektroden, die an die letzte Elektrode angrenzen, über eine Länge von mindestens drei Vierteln der Dicke der Vorrichtung verwendet werden, um den "Symmetrierungsbereich" konstant zu halten, wenn sich die Größe des Detektors ändert.

7. Halbleiter-Driftkammer nach Anspruch 1, wobei die Verlängerung der durchgehenden Verbindung (74, 84) die gesamte Breite des Zwischenbereichs (77, 87) abdeckt.

8. Halbleiter-Driftkammer nach Anspruch 1, umfassend eines oder mehrere der folgenden Merkmale:

   - sie ist auf n-Typ-Substraten hergestellt, wobei Elektronen die Hauptladungsträger sind, oder auf p-Typ-Substraten, wobei Löcher die Hauptladungsträger sind;
   - sie besteht aus jeder Art von Halbleitermaterial, auch aus Verbundwerkstoffen, mit beliebiger Kristallorientierung und mit beliebiger Dicke des für die Herstellung des Detektors verwendeten Materials, das für die Energie der zu detektierenden Partikel geeignet ist;
   - sie hat implantierte oder diffundierte oder Schottky-Verbindungen, egal ob scharf oder mit Tiefen- und/oder Seitenabstufungen jeglicher Art;
   - sie ist mit jeder für den vorgesehenen Zweck geeigneten Elektrodengeometrie hergestellt, einschließlich der fakultativen Verwendung von Feldplatten, die den Raum zwischen zwei aufeinanderfolgenden Verbindungen, egal ob ganz oder teilweise, abdecken und sogar die Verbindung, mit der sie nicht verbunden sind, überlappen können;
   - sie kann jede beliebige Konfiguration der integrierten Leistungswiderstände verwenden;
   - sie ist mit beliebiger Geometrie der inneren und äußeren Teile der letzten Elektrode hergestellt;
   - sie ist durch Anwendung einer beliebigen Methode zur Kontrolle der äquivalenten Oxidladung, z. B. durch Oberflächendotierung, hergestellt, um die Konzentration im Bereich der Grenzfläche zwischen Oxid und Halbleiter zu erhöhen;
   - sie ist nach einem beliebigen Verfahren hergestellt, das geeignet ist, den Leckstrom zu verringern;
   - sie weist Elektroden auf, die über einen Durchbruch oder über einen externen Schaltkreis oder über einen integrierten Teiler oder eine beliebige Kombination davon mit Strom versorgt werden;
   - sie weist ein von außen mit Strom versorgtes oder durchgebrochenes "Eintrittsfenster" auf;
   - sie weist ein "Eintrittsfenster" auf, das entweder im Bereich der "Symmetrisierung" segmentiert oder durchgängig ist;
   - sie wird für jede Art von Strahlung verwendet, wie z. B. sichtbares Licht, Röntgen- und Gammastrahlen, ionisierende und neutrale Partikel, wobei optional Detektoren verwendet werden können, die mit anderen Materialien gekoppelt sind, die eine Strahlungsdetektion ermöglichen, z. B. Szintillatorkristalle.

9. Anordnung von Halbleiter-Driftkammern, umfassend eine Halbleiterschicht, umfassend auf einer ersten Seite:

   - eine Vielzahl von Mittelelektroden, die als Anoden (91) wirken;
   - eine Vielzahl von Reihen von Driftelektroden (C, 92), die als Kathoden um die Mittelelektroden herum wirken;
   - eine Vielzahl von letzten Elektroden (93) der Reihe von Driftelektroden (C, 92), die den Anoden gegenüberliegen;
   - eine oder mehrere weitere Schutzelektroden (95); und ferner umfassend

   auf einer zweiten Seite, die der ersten Seite gegenüberliegt, eine durchgehende Verbindung (94), die als Eintrittsfenster dient und sich über die gesamte Anordnung erstreckt, und außerhalb der durchgehenden Verbindung eine oder mehrere weitere Schutzelektroden (96);
   eine Vielzahl von nebeneinander angeordneten ersten zentralen Bereichen oder Kernen, die eine Mittelelektrode umfassen und an einer jeweiligen letzten Elektrode enden, und einen zweiten peripheren Bereich (95, 96), der die Schutzelektroden umfasst und die Struktur mechanisch verschließt,

wobei zwischen dem ersten Bereich und dem zweiten Bereich ein Zwischenbereich (97) in die Schicht eingefügt ist, wobei der Zwischenbereich die Anordnung außen umgibt und zwischen den Anordnungskernen nicht vorhanden ist, umfassend

auf der ersten Seite eine oder mehrere weitere Symmetrisierungselektroden (98', 98"), die als Kathoden wirken, und auf der zweiten Seite eine Verlängerung der durchgehenden Verbindung (94), die eine Breite aufweist, die mindestens der Dicke des Detektors entspricht,

wobei die eine oder die mehreren Symmetrisierungselektroden so beschaffen sind, dass sie, wenn alle Elektroden mit Strom versorgt werden, eine nahezu symmetrische Form der elektrischen Feldlinien in der Schicht mit entgegengesetzter Neigung in Bezug auf die Form der elektrischen Feldlinien erzeugen, die von der Reihe von Driftelektroden erzeugt werden,

**dadurch gekennzeichnet, dass**
der Zwischenbereich (97) eine Breite aufweist, die mindestens der Dicke der Schicht entspricht und an der letzten Elektrode beginnt und diese überquert.

**Revendications**

1. Détecteur de dérive à semi-conducteur, comprenant une couche de semi-conducteur comprenant, sur une première face :

- une électrode centrale servant d'anode (71, 81, 91) ;
- une série d'électrodes de dérive (C) servant de cathode autour de ladite électrode centrale ;
- une dernière électrode (73, 83, 93) de la série d'électrodes de dérive (C), opposée à l'anode ;
- une ou plusieurs électrodes de garde (75, 85, 95) supplémentaires ; et comprenant en outre, sur une seconde face, opposée à la première face, une jonction continue (74, 84, 94) servant de « fenêtre d'entrée » pour des particules devant être détectées et, de manière externe à ladite jonction continue, une ou plusieurs électrodes de garde (76, 86, 96) supplémentaires, une première zone centrale ou un premier noyau central comprenant l'électrode centrale et se terminant au niveau de la dernière électrode et une seconde zone périphérique comprenant les électrodes de garde et fermant mécaniquement la structure,

dans lequel, entre lesdites première zone et seconde zone, une région intermédiaire (77, 87, 97) est interposée dans la couche, comprenant, sur ladite première face, une ou plusieurs électrodes de « symétrisation » (78, 88, 98' et 98") supplémentaires servant de cathodes, et comprenant, sur ladite seconde face, une extension de ladite jonction continue (74, 84, 94) ayant une largeur d'au moins l'épaisseur du détecteur,

lesdites une ou plusieurs électrodes de symétrisation étant conçues pour créer, lorsque toutes les électrodes sont alimentées en énergie, une forme presque symétrique des lignes de champ électrique dans la couche, avec une pente opposée, par rapport à la forme des lignes de champ électrique générées par ladite série d'électrodes de dérive,

**caractérisé en ce que**
ladite région intermédiaire (77, 87, 97) possède une largeur au moins égale à l'épaisseur de la couche, et commençant au niveau de ladite dernière électrode (73, 83, 93) et de part et d'autre de celle-ci.

2. Détecteur de dérive à semi-conducteur selon la revendication 1, dans lequel lesdites une ou plusieurs électrodes de symétrisation (78, 88) supplémentaires sont alimentées en énergie avec des tensions proportionnées dans la direction opposée comparativement à ladite série d'électrodes de dérive (72, 82, 92).

3. Détecteur de dérive à semi-conducteur selon la revendication 1, dans lequel ladite dernière électrode (83) est plus longue vers ladite région intermédiaire, comparativement à la longueur desdites électrodes de dérive (72, 82, 92).

4. Détecteur de dérive à semi-conducteur selon la revendication 1, dans lequel une électrode parmi lesdites électrodes de symétrisation (98') dans ladite région intermédiaire, distante du bord externe de ladite région intermédiaire d'au moins la moitié de l'épaisseur du détecteur, est alimentée en énergie avec une plus haute valeur de tension absolue que ladite dernière électrode (93), les autres électrodes parmi lesdites une ou plusieurs électrodes de symétrisation (98") supplémentaires, externes à ladite une électrode parmi lesdites électrodes de symétrisation (98'), étant alimentées en énergie avec des tensions proportionnées dans la direction opposée comparativement à ladite série d'électrodes de dérive (92).

5. Détecteur de dérive à semi-conducteur selon la revendication 4, dans lequel ladite une électrode parmi lesdites électrodes de symétrisation (98') alimentée en énergie avec une plus haute tension est adjacente à ladite dernière électrode (93).

**6.** Détecteur de dérive à semi-conducteur selon la revendication 1, dans lequel des résistances de puissance intégrées modifiées sont utilisées dans un nombre approprié d'électrodes de dérive adjacentes à ladite dernière électrode, sur une longueur au moins égale à trois quarts de l'épaisseur du dispositif, dans le but de maintenir la région de « symétrisation » constante lorsque la taille du détecteur change.

**7.** Détecteur de dérive à semi-conducteur selon la revendication 1, dans lequel ladite extension de la jonction continue (74, 84) recouvre la totalité de la largeur de la région intermédiaire (77, 87).

**8.** Détecteur de dérive à semi-conducteur selon la revendication 1, comprenant l'une ou plusieurs des caractéristiques suivantes :

> - il est fabriqué sur des substrats de type n, dans lesquels les électrons sont les porteurs majoritaires, ou sur des substrats de type p, dans lesquels les trous sont les porteurs majoritaires ;
> - il est fabriqué à partir d'un quelconque type de matériau semi-conducteur, même les matériaux composites, avec une quelconque orientation cristalline, et avec une quelconque épaisseur du matériau utilisé pour la fabrication du détecteur, approprié pour que l'énergie des particules soit détectée ;
> - il possède des jonctions Schottky implantées ou diffusées, qu'elles soient aiguisées ou avec une gradation en profondeur et/ou latérale d'un quelconque type ;
> - il est fabriqué avec une quelconque géométrie d'électrode appropriée pour l'usage prévu, dont l'utilisation facultative de plaques de champ qui peuvent recouvrir, que ce soit totalement ou partiellement, l'espace entre deux jonctions successives, en chevauchant même la jonction à laquelle elles ne sont pas connectées ;
> - il peut utiliser une quelconque configuration des résistances de puissance intégrées ;
> - il est fabriqué avec une quelconque géométrie des parties internes et externes à ladite dernière électrode ;
> - il est fabriqué en utilisant un quelconque procédé pour la régulation de la charge en oxyde équivalente, par ex. par dopage de surface, afin d'augmenter la concentration dans la région autour de l'interface entre l'oxyde et le semi-conducteur ;
> - il est fabriqué en utilisant un quelconque procédé approprié pour la réduction du courant de fuite ;
- il possède des électrodes alimentées en énergie par perforation, ou via une circuiterie externe, ou via un diviseur intégré, ou une quelconque combinaison de ceux-ci ;
- il possède une « fenêtre d'entrée» alimentée en énergie de manière externe ou perforée ;
- il possède une « fenêtre d'entrée » qui est soit segmentée dans la région de « symétrisation », soit continue ;
- il est utilisé pour un quelconque type de rayonnement, tel que la lumière visible, les rayons X et gamma, les particules ionisantes et neutres, avec l'utilisation facultative de détecteurs couplés à d'autres matériaux permettant une détection de rayonnement, par ex. des cristaux de scintillateur.

**9.** Réseau de détecteurs de dérive à semi-conducteur, comprenant une couche de semi-conducteur comprenant, sur une première face :

> - une pluralité d'électrodes centrales servant d'anodes (91) ;
> - une pluralité de séries d'électrodes de dérive (C, 92) servant de cathodes autour desdites électrodes centrales ;
> - une pluralité de dernières électrodes (93) de la série d'électrodes de dérive (C, 92), opposées aux anodes ;
> - une ou plusieurs électrodes de garde (95) supplémentaires ; et comprenant en outre
> sur une seconde face, opposée à la première face, une jonction continue (94) servant de fenêtre d'entrée s'étendant sur tout le réseau et, de manière externe à ladite jonction continue, une ou plusieurs électrodes de garde (96) supplémentaires ;
> une pluralité de premières zones centrales ou de premiers noyaux centraux agencé(e)s côte à côte, comprenant une électrode centrale et se terminant au niveau d'une dernière électrode respective et une seconde zone périphérique (95, 96) comprenant les électrodes de garde et fermant mécaniquement la structure,
> dans lequel, entre lesdites première zone et seconde zone, une région intermédiaire (97) est interposée dans la couche, la région intermédiaire encerclant de manière externe le réseau et étant absente entre les noyaux de réseau, comprenant

> > sur ladite première face, une ou plusieurs électrodes de symétrisation (98', 98") supplémentaires servant de cathodes, et comprenant, sur ladite seconde face, une extension de ladite jonction continue (94) ayant une largeur d'au moins l'épaisseur du détecteur,

lesdites une ou plusieurs électrodes de symétrisation étant conçues pour créer, lorsque toutes les électrodes sont alimentées en énergie, une forme presque symétrique des lignes de champ électrique dans la couche, avec une pente opposée, par rapport à la forme des lignes de champ électrique générées par ladite série d'électrodes de dérive,

**caractérisé en ce que**
ladite région intermédiaire (97) possède une largeur au moins égale à l'épaisseur de la couche, et commençant au niveau de ladite dernière électrode et de part et d'autre de celle-ci.

FIG. 1a

FIG. 1b

FIG. 2

FIG. 3

**FIG. 4**

EP 3 864 441 B1

FIG. 5.1

FIG. 5.2

EP 3 864 441 B1

**FIG. 6**

**FIG. 7**

FIG. 8.1

FIG. 8.2

FIG. 9.1

FIG. 9.2

25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2275837 A2

- US 20040149919 A1